# EUROPEAN PATENT APPLICATION

(11) **EP 3 868 797 A1**
(43) Date of publication of application: **25.08.2021**
(21) Application number: 20166341.6
(22) Date of filing: 27.03.2020
(51) Int. Cl.: C08F 210/06, C08F 4/655, C08F 2/06, C08F 2/14, C08L 95/00

(54) **AMORPHOUS POLYPROPYLENE COPOLYMER AND METHOD FOR PREPARING THE SAME**

(30) Priority: 13.02.2020 KR 20200017430
(71) Applicant: Korea Petrochemical Ind. Co., Ltd., Seoul 03035 (KR)
(72) Inventor: JUNG, Yeon Jae, 44539 ULSAN (KR); HA, Hyun Soo, 44708 ULSAN (KR); KANG, Gil Soon, 05555 SEOUL (KR); JEONG, Young Tae, 04427 SEOUL (KR)
(74) Representative: Cabinet Laurent & Charras

(57) **Abstract**

According to an embodiment, a method for preparing an amorphous polypropylene copolymer comprises injecting a volume of hexane into a nitrogen-purged reactor, the volume of the hexane corresponding to 20% to 80% of a volume of the reactor, injecting, into the reactor, and mixing an amount of alkyl cocatalyst, the amount of the alkyl cocatalyst corresponding to 1 to 50 times a weight of a primary catalyst, injecting the primary catalyst into the reactor, stirring, and then injecting a molecular weight regulator; and injecting propylene and a monomer for copolymerization into the reactor at a temperature ranging from 40 °C to 90 °C.

## Description

### TECHNICAL FIELD

Embodiments of the disclosure relate to an amorphous polypropylene copolymer and method for preparing the same, and more specifically, to a method for preparing an amorphous polypropylene copolymer with superior durability and low-temperature flexibility under a low-temperature, low-pressure condition, using a free-donor process and an amorphous polypropylene copolymer prepared by the method.

### DESCRIPTION OF RELATED ART

It is know that crystalline polypropylene has an isotactic or syndiotactic molecular structure, and amorphous polypropylene has an atactic molecular structure. In isotactic polypropylene, all the propylene methyl groups are arranged along the same side of the polymer chain and, in syndiotactic polypropylene, the propylene methyl groups are aligned alternating on the polymer chain. Isotactic or syndiotactic polypropylene has a high degree of crystallinity due to its regularity in molecular structure. Amorphous polypropylene has a low degree of crystallinity (heat capacity enthalpy not more than 70J/g) due to its irregular molecular structure.

Amorphous polypropylene is sticky due to low crystallinity and thus gains popularity as an adhesive. In conventional methods for preparing amorphous polypropylene, an internal donor and external donor are applied to an MgR1R2 catalyst structure as follows. R1 denotes the alkoxy or aryl oxide group, and R2 alkoxide, aryl oxide, or halogen group. As the internal donor, silane or amines, particularly, cyclohexylmethyldimethoxysilane, 2,6-lutidine, or 6-chloro 2-picoline, are used and, as the external donor, a silane is used (refer to U.S. Patent No. 5,948,720). Similar methods are disclosed in U.S. Patent Nos. 5,118,768, 5,089,573, 5,118,649, 5,118,767, and 5,294,581.

The inventors of the present disclosure developed a free donor process that uses no internal and external donor in processing and thus provides further simplified and efficient processing.

Generally, amorphous polypropylene has lower durability than crystalline polypropylene due to its low molecular weight (refer to U.S. Patent No. 5,948,720). Thus, surface cracks or foot prints may result.

The inventors of the present disclosure invented a method for preparing an amorphous polypropylene copolymer with superior durability and low-temperature flexibility by increasing the molecular weight.

Durability compromises, or is in inverse proportion with, low-temperature flexibility, and there was no amorphous polypropylene copolymer excellent in both durability and low-temperature flexibility.

### SUMMARY

According to an embodiment, there is provided a method for preparing an amorphous polypropylene copolymer excellent in both durability and low-temperature flexibility by adopting a free donor process that uses no internal and external donor.

According to an embodiment, there is provided an amorphous polypropylene copolymer with superior durability and low-temperature flexibility, prepared by a method of the present disclosure.

According to an embodiment, a method for preparing an amorphous polypropylene copolymer comprises injecting a volume of hexane into a nitrogen-purged reactor, the volume of the hexane corresponding to 20% to 80% of a volume of the reactor, injecting, into the reactor, and mixing an amount of alkyl cocatalyst, the amount of the alkyl cocatalyst corresponding to 1 to 50 times a weight of a primary catalyst, injecting the primary catalyst into the reactor, stirring, and then injecting a molecular weight regulator; and injecting propylene and a monomer for copolymerization into the reactor at a temperature ranging from 40 °C to 90 °C.

The method meets a low-temperature condition ranging from 40 °C to 90 °C and a low-pressure condition ranging from 43 psig to 145 psig.

The alkyl cocatalyst is any one selected from the group consisting of trimethylaluminum, triethylaluminium, tetraisobuthyl aluminum, and a mixture thereof.

The method further comprises mixing a carrier with a reformed solvent, substituting the reformed solvent by adding a substituting agent to the mixture, and generating an active site in the carrier by adding a titanium compound to the mixture and stirring them.

The carrier is any one selected from the group consisting of dihalogen magnesium of magnesium fluoride, magnesium chloride, magnesium bromide, or magnesium iodide, alkyl magnesium halide of methyl magnesium halide, ethyl magnesium halide, propyl magnesium halide, butyl magnesium halide, isobutyl magnesium halide, or hexyl magnesium halide, alkoxy magnesium halide of methoxy magnesium halide, ethoxy magnesium halide, isopropoxy magnesium halide, butoxy magnesium halide, or octoxy magnesium halide, aryloxy magnesium halide of phenoxy magnesium halide or methylphenoxy magnesium halide, and dialkoxy magnesium of dimethoxy magnesium, diethoxy magnesium, dibutoxy magnesium, or dioctoxy magnesium.

The substituting agent is any one selected from the group consisting of methylaluminium dichloride, dimethylaluminium chloride, ethylaluminium dichloride, diethylaluminium chloride, and a mixture thereof.

The monomer for copolymerization includes ethylene, butene, or a mixture thereof.

According to an embodiment, there is provided an amorphous polypropylene copolymer prepared by the method. The amorphous polypropylene copolymer is prepared by mixing the primary catalyst and an alkylaluminium cocatalyst without adding an external donor.
15 wt% to 22 wt% of comonomer are included at a softening point ranging from 130 °C to 145 °C.

The amorphous polypropylene copolymer has a melt viscosity ranging from 10,000 cp to 150,000 cp at a measuring temperature of 190 °C.

According to an embodiment, a formed body including the amorphous polypropylene copolymer.

According to various embodiments of the present disclosure, it is possible to prepare an amorphous polypropylene copolymer with superior durability and low-temperature flexibility.

According to various embodiments, the method may prepare an amorphous polypropylene copolymer that allows for further simplified and efficient processing by a free donor process and meets a melt viscosity ranging from 10,000 cp to 150,000 cp at a measuring temperature of 190 °C and has superior low-temperature flexibility.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
Fig. 1 is a table illustrating basic physical properties of amorphous polypropylene copolymers according to the prior art and an embodiment of the present disclosure;
Fig. 2 is a table illustrating differences in wt% of comonomers depending on softening points according to the prior art and an embodiment of the present disclosure; and
Fig. 3 is a table illustrating differences in low-temperature flexibility of final products upon mixing with asphalt (Bitumen) in the same ratio according to the prior art and an embodiment of the present disclosure.

### DETAILED DESCRIPTION OF EXEMPLARY EMBODIMENTS

Hereinafter, embodiments of the present disclosure are described in detail.

The present disclosure provides a method for preparing an amorphous polypropylene copolymer with superior durability and low-temperature flexibility.

According to an embodiment, there is provided a method for preparing an amorphous polypropylene copolymer with superior durability and low-temperature flexibility, the method comprising injecting a volume of hexane into a nitrogen-purged reactor, the volume of the hexane corresponding to 20% to 80% of a volume of the reactor, injecting, into the reactor, and mixing an amount of alkyl cocatalyst, the amount of the alkyl cocatalyst corresponding to 1 to 50 times a weight of a primary catalyst, injecting the primary catalyst into the reactor, stirring, and then injecting a molecular weight regulator, and injecting propylene and a monomer for copolymerization into the reactor at a temperature ranging from 40 °C to 90 °C

According to an embodiment, the method is performed preferably under a low-temperature condition ranging from 40 °C to 90 °C and a low-pressure condition ranging from 43 psig to 145 psig.

The cocatalyst, e.g., the alkyl cocatalyst, is a material for increasing the activity of the primary catalyst. Preferably, the cocatalyst, e.g., the alkyl cocatalyst, may be any one selected from the group consisting of trimethylaluminum, triethylaluminium, tetraisobuthyl aluminum, and a mixture thereof. More preferably, the cocatalyst, e.g., the alkyl cocatalyst may be triethylaluminium. Preferably, the weight of the cocatalyst used may be 1 to 50 times the weight of the primary catalyst, 10 wt% to 20 wt%-diluted hexane may be used, and more preferably, 15 wt%-diluted hexane may be used.

In the method, the primary catalyst may be prepared by a method including mixing a carrier with a reformed solvent, substituting the reformed solvent by adding a substituting agent to the mixture, and generating an active site in the carrier by adding a titanium compound to the mixture and stirring them.

In preparing the primary catalyst, the carrier may be a material for increasing the surface area of catalyst to increase catalytic activity. The carrier may be any one selected from the group consisting of dihalogen magnesium of magnesium fluoride, magnesium chloride, magnesium bromide, or magnesium iodide, alkyl magnesium halide of methyl magnesium halide, ethyl magnesium halide, propyl magnesium halide, butyl magnesium halide, isobutyl magnesium halide, or hexyl magnesium halide, alkoxy magnesium halide of methoxy magnesium halide, ethoxy magnesium halide, isopropoxy magnesium halide, butoxy magnesium halide, or octoxy magnesium halide, aryloxy magnesium halide of phenoxy magnesium halide or methylphenoxy magnesium halide, and dialkoxy magnesium of dimethoxy magnesium, diethoxy magnesium, dibutoxy magnesium, or dioctoxy magnesium.

In preparing the primary catalyst, the reformed solvent may be a medium used for dissociating the crystalline structure of the carrier and leading to Mg-Cl-Ti reaction. The reformed solvent may be an alcohol with 1 to 20 carbons. In this case, the alcohol may be, e.g., methanol, ethanol, propanol, butanol, pentanol, hexanol, octanol, decanol, 2-ethyl hexanol, dodecanol, octadecyl alcohol, benzyl alcohol, cyclohexanol, isobutyl alcohol, or a mixture thereof. More preferably, the alcohol may be ethanol. Preferably, the amount of the reformed solvent used may be 1 to 15 times the number of moles of the carrier.

In preparing the primary catalyst, the substituting agent may be a material for aiding in substituting and separating out the reformed solvent present inside the carrier. Preferably, the substituting agent is any one selected from the group consisting of methyl aluminium dichloride, dimethylaluminium chloride, ethylaluminium dichloride, diethylaluminium chloride, and a mixture thereof. Preferably, the amount of the substituting agent used may be 1 to 20 times the number of moles of the carrier.

In preparing the primary catalyst, the titanium compound may be represented as in chemical formula 1 below:

[Chemical formula 1] Ti(OR)ₐX₄₋ₐ

In chemical formula 1 above, R, X, and a, respectively, denote the hydrocarbon group, halogen atom, and a natural number ranging from 0 to 4.

The titanium compound represent in chemical formula 1, may include one or more selected from the group consisting of, e.g., tetrahalide titanium of tetrachloro titanium, tetrabromo titanium, or tetraiodo titanium, trihalide alkoxy titanium of trichloromethoxy titanium, trichloroethoxy titanium, tribromoethoxy titanium, or tribromoisobutoxy titanium, trihalidealkoxy titanium of tribromoethoxy titanium or tribromoisobutoxy titanium, dihalide alkoxy titanium of dichlorodimethoxy titanium, dichlorodiethoxy titanium, dichlorodiisobutoxy titanium, or dibromodiethoxy titanium, and tetraalkoxy titanium of tetramethoxy titanium, tetraethoxy titanium, or tetrabutoxy titanium. A titanium compound containing halogen is preferable, and tetrachloro titanium is most preferable. Titanium is a material to give catalytic activity, and the amount of titanium used may be preferably 1 to 20 times the number of moles of the carrier.

In preparing the amorphous polypropylene copolymer, the molecular weight regulator may be preferably hydrogen, and the amount of the molecular weight regulator injected may preferably range from 0.1 kg/cm² to 1 kg/cm².

In preparing the amorphous polypropylene copolymer, the monomer for copolymerization is preferably any one selected from the group consisting of ethylene, butene, and a mixture thereof. More preferably, the monomer for polymerization is ethylene.

According to an embodiment, a method for preparing a primary catalyst for preparing an amorphous polypropylene copolymer comprises mixing a carrier with a reformed solvent, substituting the reformed solvent by adding a substituting agent to the mixture, and generating an active site in the carrier by adding a titanium compound to the mixture and stirring them.

According to an embodiment, the primary catalyst has superior reactivity with a molecular weight regulator, e.g., hydrogen, and may increase the content of monomer for copolymerization in the polymer, thus enabling preparation of an amorphous polypropylene copolymer with superior durability and low-temperature flexibility even under a low hydrogen pressure and low-pressure operation condition.

According to an embodiment, there is provided an amorphous polypropylene copolymer prepared by the method, in which the amorphous polypropylene copolymer is prepared by mixing the primary catalyst and an alkyl aluminium cocatalyst without adding an external donor.

According to an embodiment, in the amorphous polypropylene copolymer, 15 wt% to 22 wt% of comonomer may be included at a softening point ranging from 130 °C to 145 °C. According to an embodiment, the amorphous polypropylene copolymer may preferably have a melt viscosity not more than 150,000 cp at a measuring temperature of 190 °C. More preferably, the amorphous polypropylene copolymer may have a high melt viscosity ranging from 10,000 cp to 150,000 cp at a measuring temperature of 190 °C.

According to an embodiment, there is provided a polypropylene resin composition including an amorphous polypropylene copolymer with superior durability and low-temperature flexibility.

The polypropylene resin composition includes 10 wt% to 90 wt% of amorphous polypropylene copolymer.

According to an embodiment, there is provided a formed body including an amorphous polypropylene copolymer with superior durability and low-temperature flexibility.

According to an embodiment, there are provided an article or product, such as a sheet, band, rope, tube, pipe, or film, including an amorphous polypropylene copolymer with superior durability and low-temperature flexibility.

According to an embodiment, the amorphous polypropylene copolymer, by its superior durability and low-temperature flexibility, may have various applications, such as for asphalt or building materials.

Hereinafter, exemplary embodiments and experimental examples of the present disclosure are described below in detail.

The embodiments and experimental examples disclosed herein are mere preferable examples and the technical spirit or scope of the present disclosure is not limited thereto. Therefore, various changes may be made thereto, and equivalents thereof also belong to the scope of the present disclosure.

### <Embodiment 1> preparation of primary catalyst

A primary catalyst was prepared in the following process.

Step i) Magnesium chloride was mixed with ethanol, as reformed solvent, in a molar ratio of magnesium chloride to ethanol (=1:1 to 1 to 15), at the room temperature for one hour to six hours.

Step iii) The mixture of step i) was mixed with diethyl aluminum chloride whose number of moles was 1 to 20 times the number of moles of the magnesium chloride for one minute to 60 minutes, thereby substituting the ethanol.

Step iii) The mixture of step ii) was mixed with tetrachloro titanium whose number of moles was 1 to 20 times the number of moles of the magnesium chloride and they were then stirred at a temperature ranging from 70 °C to 90 °C for one to six hours, thereby generating a Ti active site in the message chloride.

### <Embodiment 2> preparation of amorphous polypropylene copolymer

An amorphous polypropylene copolymer was prepared in the following process.
Step i) Hexane was injected into a nitrogen-purged reactor (2L Autoclave type), in a volume corresponding to 20% to 80% of the volume of the reactor.
Step ii) Triethylaluminium, as an alkyl cocatalyst, which was diluted with 15 wt% of hexane whose weight is 1 to 50 times the weight of a primary catalyst, was injected into the reactor, which has undergone step i), and mixed at the room temperature for one to 30 minutes.
Step iii) The primary catalyst prepared according to embodiment 1 above was mixed and stirred with the mixture of step ii) for one to 30 minutes, and then, 0.1 kg/cm² to 1 kg/cm² was added thereto.
Step iv) Propylene and ethylene, as a monomer for copolymerization, were added to the mixture of step iii) at a temperature ranging from 40 °C to 90 °C. At this time, the feed weight ratio of propylene to ethylene was 95:5 to 55:45, and the propylene and ethylene were added or injected via a mass flow controller (MFC) (commercially available from Line Tech).

### <Experimental example 1> analysis of properties of amorphous polypropylene copolymer

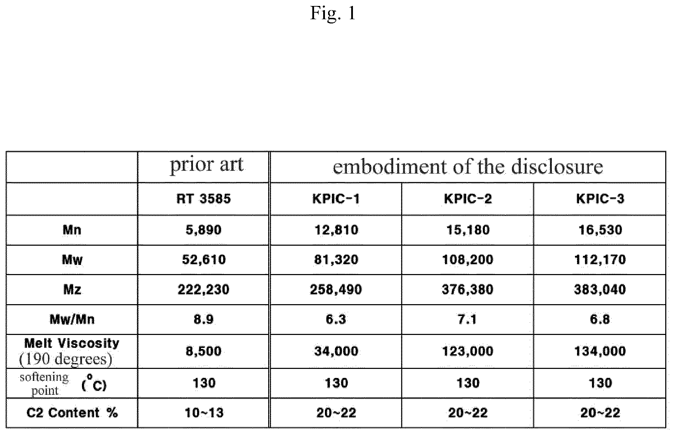

For comparison as to per-melt velocity low-temperature flexibility of an amorphous polypropylene copolymer according to embodiment 2 above, amorphous polypropylene copolymers were prepared which have the same softening point as RT3585 (from REXTAC LLC) prepared according to the prior art and have melt viscosities of 30,000 cP (KPIC-1), 120,000 cP (KPIC-2), and 130,000 cP (KPIC-3) at a measuring temperature of 190 °C. (Fig. 1).

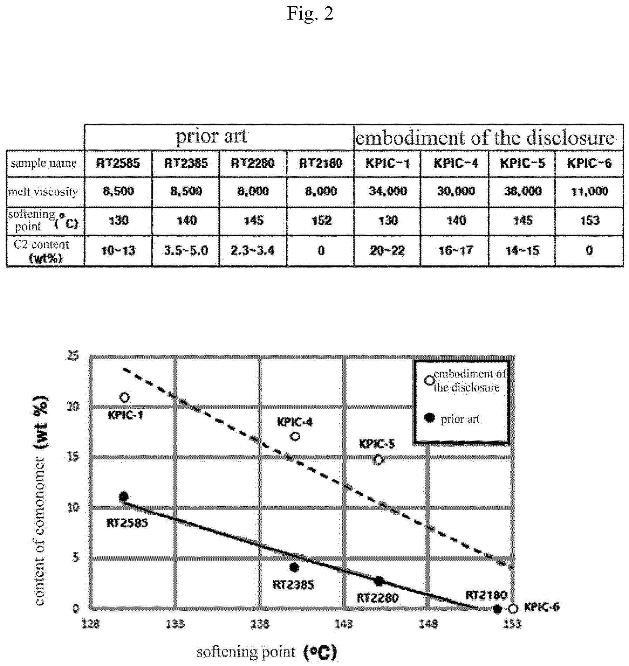

For comparison in wt% of comonomer depending on softening points of an amorphous polypropylene copolymer according to embodiment 2 above, KPIC-4, KPIC-5, and KPIC-6 were prepared which have the same softening point as RT2585, RT2385, RT2280, and RT2180 (from REXTAC) prepared according to the prior art (Fig. 2).

For the amorphous polypropylene copolymer according to embodiment 2, the molecular weight properties, melt velocity, softening point, and content of comonomer were analyzed using High Temperature Chromatography (PL-GPC 220, Agilent Technologies), Brookfield DV3T Rotational Viscometer, Softening Point Tester(ASP-6, TANAKA), and Nuclear Magnetic Resonance (Ascend 400, Bruker), respectively.

The amorphous polypropylene and polypropylene copolymer from REXTAC LLC were prepared under a high temperature condition ranging from 150 °C to 250 °C and under a high pressure condition ranging from 1,000 psig to 1,500 psig. Under such high-temperature, high-pressure conditions, the weight content of comonomer in the polypropylene copolymer could not be 13 wt% or more due to thermal resistance issues (refer to U.S. Patent No. 3,923,758).

The inventors of the present disclosure have succeeded in developing an amorphous polypropylene copolymer under a low-temperature condition ranging from 40 °C to 90 °C and under a low-pressure condition ranging from 43 psig to 145 psig. As a result, it has been identified that the polypropylene copolymer of the present disclosure could increase the content of comonomer by 10 wt% to 13 wt%, at the same softening point, as compared with the polypropylene copolymers (RT2585, RT2385, and RT2280) from REXTAC LLC prepared according to the prior art (Fig. 2).

From an energy saving point of view, low-temperature, low-pressure processing is more economic than high-temperature, high-pressure processing. Further, the present disclosure adopts free-donor processing which uses no internal or external donor, thus leading to further simplified and efficient processing.

### <Experimental example 2> Analysis of durability and low-temperature flexibility

To assess the durability and low-temperature flexibility of a polypropylene copolymer according to embodiment 2, R3585 (from REXTAC LLC) prepared according to the prior art and a polypropylene copolymer of the present disclosure were mixed with asphalt (Nybit E190) in the same ratio, and the final product was identified for durability and low-temperature flexibility.

As compared with the polypropylene copolymer from REXTAC LLC prepared according to the prior art, the polypropylene copolymer of the present disclosure allowed the low-temperature flexibility limit to exceed by -7.5 °C to -10 °C (e.g., -22.5 °C according to the prior art and -30.0 °C to -32.5 °C according to the present disclosure) thanks to its capability of increasing the content of comonomer by 10 wt% to 13 wt% at the same softening point.

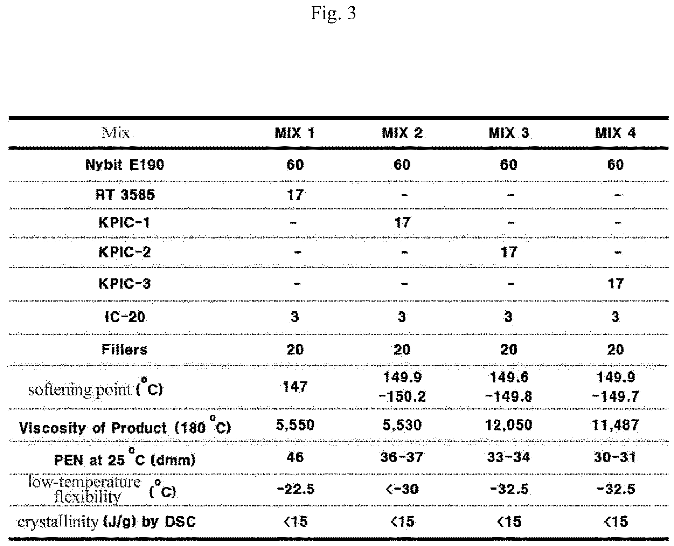

Further, as compared with the polypropylene copolymer prepared according to the prior art, the polypropylene copolymer of the present disclosure was identified to have a 1.2 times to 1.5 times higher durability due to a melt viscosity ranging from 10,000 cp to 150,000 cp, at a measuring temperature of 190 °C (Fig. 3).

Typically, durability compromises, or is in inverse proportion with, low-temperature flexibility, and it was difficult to develop an amorphous polypropylene copolymer excellent in both durability and low-temperature flexibility using the prior art which adopts high temperature, high pressure.

However, the inventors of the present disclosure succeeded in developing an amorphous polypropylene copolymer superior in both durability and low-temperature flexibility under a low-temperature, low-pressure condition and it was identified that the present disclosure could overcome the issues with the prior art, such as low durability and limitations to commercial use.

It will be appreciated by one of ordinary skill in the art that the present disclosure may be implemented in other various specific forms without changing the essence or technical spirit of the present disclosure. Thus, it should be noted that the above-described embodiments are provided as examples and should not be interpreted as limiting. It should be noted that the scope of the present disclosure is defined by the appended claims rather than the described description of the embodiments and include all modifications or changes made to the claims or equivalents of the claims.

An amorphous polypropylene copolymer with superior durability and low-temperature flexibility, as prepared by a method according to the present disclosure, has high durability and adhesivity properties and thus has various applications, such as for shoes or such household products, interior or exterior materials for cars, or various products using asphalt.

## Claims

1. A method for preparing an amorphous polypropylene copolymer, the method comprising:
injecting a volume of hexane into a nitrogen-purged reactor, the volume of the hexane corresponding to 20% to 80% of a volume of the reactor;
injecting, into the reactor, and mixing an amount of alkyl cocatalyst, the amount of the alkyl cocatalyst corresponding to 1 to 50 times a weight of a primary catalyst;
injecting the primary catalyst into the reactor, stirring, and then injecting a molecular weight regulator; and
injecting propylene and a monomer for copolymerization into the reactor at a temperature ranging from 40 °C to 90 °C.

2. The method of claim 1, wherein the method meets a low-temperature condition ranging from 40 °C to 90 °C and a low-pressure condition ranging from 43 psig to 145 psig.

3. The method of claim 1, wherein the alkyl cocatalyst is any one selected from the group consisting of trimethylaluminum, triethylaluminium, tetraisobuthyl aluminum, and a mixture thereof.

4. The method of claim 1, further comprising:
mixing a carrier with a reformed solvent;
substituting the reformed solvent by adding a substituting agent to the mixture; and
generating an active site in the carrier by adding a titanium compound to the mixture and stirring them.

5. The method of claim 4, wherein the carrier is any one selected from the group consisting of dihalogen magnesium of magnesium fluoride, magnesium chloride, magnesium bromide, or magnesium iodide, alkyl magnesium halide of methyl magnesium halide, ethyl magnesium halide, propyl magnesium halide, butyl magnesium halide, isobutyl magnesium halide, or hexyl magnesium halide, alkoxy magnesium halide of methoxy magnesium halide, ethoxy magnesium halide, isopropoxy magnesium halide, butoxy magnesium halide, or octoxy magnesium halide, aryloxy magnesium halide of phenoxy magnesium halide or methylphenoxy magnesium halide, and dialkoxy magnesium of dimethoxy magnesium, diethoxy magnesium, dibutoxy magnesium, or dioctoxy magnesium.

6. The method of claim 4, wherein the substituting agent is any one selected from the group consisting of methylaluminium dichloride, dimethylaluminium chloride, ethylaluminium dichloride, diethylaluminium chloride, and a mixture thereof.

7. The method of claim 1, wherein the monomer for copolymerization includes ethylene, butene, or a mixture thereof.

8. An amorphous polypropylene copolymer prepared by the method of claim 1, wherein the amorphous polypropylene copolymer is prepared by mixing the primary catalyst and an alkylaluminium cocatalyst without adding an external donor.

9. The amorphous polypropylene copolymer of claim 8, wherein 15 wt% to 22 wt% of comonomer are included at a softening point ranging from 130 °C to 145 °C.

10. The amorphous polypropylene copolymer of claim 8, wherein the amorphous polypropylene copolymer has a melt viscosity ranging from 10,000 cp to 150,000 cp at a measuring temperature of 190 °C.

11. A formed body including the amorphous polypropylene copolymer of claim 8.
